Europäisches Patentamt

**European Patent Office**

Office européen des brevets

(11) Publication number: **0 036 299**

**A2**

(12) # EUROPEAN PATENT APPLICATION

(21) Application number: **81301036.0**

(22) Date of filing: **12.03.81**

(51) Int. Cl.³: **B 62 M 9/12**

(30) Priority: **14.03.80 JP 34097/80 U**

(43) Date of publication of application:
**23.09.81 Bulletin 81/38**

(84) Designated Contracting States:
**BE DE FR GB IT**

(71) Applicant: **SHIMANO INDUSTRIAL COMPANY LIMITED**
**77, 3-cho Oimatsu-cho Sakai-shi**
**Osaka(JP)**

(72) Inventor: **Shimano, Keizo**
**81, 3-cho, Midorigaoka-Minamimachi Sakai-shi**
**Osaka(JP)**

(74) Representative: **Szczuka, Jan Tymoteusz et al,**
**Cruikshank & Fairweather 19 Royal Exchange Square**
**Glasgow G1 3AE Scotland(GB)**

(54) **Cycle derailleur.**

(57) This invention relates to a rear derailleur for a cycle said derailleur comprising a main derailleur body (A) provided with a base member (2) and a movable member (4) connected thereto so as to be movable axially of said sprockets and relative to said base member (2). A chain shift means (B) provided with a pulley plate (6) is pivotally mounted on said movable member (4), and a guide pulley (9) and tension pulley (10) are rotatably mounted on said pulley plate (6). First and second guard plates (14,15) are formed and arranged on the opposite side of said guide and tension pulleys (9,10) respectively, from said pulley plate (6) for preventing lateral disengagement of the drive chain (C). The first guard plate (14) is formed and arranged with its front edge (14a) disposed radially inwardly of the outer periphery of the tension pulley (10) and in proximity to the centre of the latter. In known such derailleurs there is a risk of the wheel spokes being trapped between the tension pulley (10) and the first guard plate means (14).

According to this invention a pulley cap (16) is provided between the tension pulley (10) and first guard plate (14), said pulley cap (16) having a central portion (16a) and a radially outer portion (16b) extending into contact with or close proximity to the side of the tension pulley (10) for preventing entry of a spoke therebetween, the radially outer portion (16b) of the cap (16) extending radially outwardly of the front edge (14a) of the first guard plate (14).

FIG.2

## CYCLE DERAILLEUR

This invention relates to a rear derailleur for a cycle for use in switching a drive chain between the sprockets of a multi-stage sprocket assembly provided at a rear wheel of the cycle, said derailleur comprising; a main derailleur body provided with a base member and a movable member connected thereto so as to be movable axially of said sprockets and relative to said base member; and a chain shift means provided with a pulley plate pivotally mounted on said movable member, a guide pulley and tension pulley rotatably mounted on said pulley plate and first and second guard plate means formed and arranged on the opposite side of said guide and tension pulleys respectively, from said pulley plate for preventing lateral disengagement of the drive chain, in use of the derailleur, from said guide and tension pulleys, said first guard plate means being formed and arranged with its front edge, with respect to the forward direction of movement of the cycle, disposed radially inwardly of the outer periphery of the tension pulley and in proximity to the centre of the latter.

In use of such a rear derailleur mounted on the hub shaft of a rear wheel provided with a multi-stage sprocket assembly, the guard plate means is disposed opposite the spokes of the rear wheel. As the front edge, with respect to the forward direction of movement of the cycle, of the guard plate, in particular at the tension pulley, is in practice spaced apart from the tension pulley forming therebetween a gap which is larger than the diameter of a spoke, the following problem can occur.

Since the low speed sprocket is positioned in close proximity to the spokes of the rear wheel, then if the drive chain is shifted too far, or is switched by a derailleur supported on a fork end of the cycle frame which has been deformed in an accident or by falling over of the cycle, the spokes of the rear wheel may enter the abovementioned gap between the guard plate and the tension pulley during running of the cycle. This will result in the spokes being broken and/or the rear wheel locking thereby resulting in falling over of the cycle.

It is an object of the present invention to avoid or minimize one or more of the above disadvantages.

The present invention provides a rear derailleur for a cycle, for use in switching a drive chain between the sprockets of a multi-stage sprocket assembly provided at a rear wheel of the cycle, said derailleur comprising; a main derailleur body provided with a base member and a movable member connected thereto so as to be movable axially of said sprockets and relative to said base member; and a chain shift means provided with a pulley plate pivotally mounted on said movable member, a guide pulley and tension pulley rotatably mounted on said pulley plate, and first and second guard plate means formed and arranged on the opposite side of said guide and tension pulleys respectively, from said pulley plate, for preventing lateral disengagement of the drive chain, in use of the derailleur, from said guide and tension pulleys, said first guard plate means being formed and arranged with its front edge, with respect to the forward direction of movement of the cycle, disposed radially inwardly of the outer periphery of the tension pulley and in proximity to the centre of the latter, characterized in that a pulley cap is provided between said tension pulley and said first guard plate means, said pulley cap having a central portion and a radially outer portion extending into contact with or close proximity to the side of the tension pulley for preventing entry of a spoke therebetween, in use of the derailleur, said radially outer portion extending radially outwardly of said front edge of said first guard plate means whereby entry of a spoke between the tension pulley and first guard plate means is prevented.

The cap closes any gap between the side of the tension pulley and the front edge of the guard plate as well as covering a large part of the side of the tension pulley. As a result the spokes of the rear wheel are guided away by the outer surface of the guard plate and prevented from entering between the tension pulley and guard plate in the event that the chain shift means should come into contact with the spokes. Thus the cap minimizes the possibility of spoke breakage or falling over of the cycle due to locking of the rear wheel.

Conveniently such a guard plate is provided at each of the guide and the tension pulleys, namely a first guard plate means at the tension pulley and a second guard plate means at the guide pulley, the first and second guard plate means being in the form of discrete plates or an integrally formed unit.

Further preferred features and advantages of the invention will appear from the following description given by way of example of some preferred embodiments illustrated with reference to the accompanying drawings, in which:

Fig. 1 is a side view of a first embodiment of a rear derailleur of the invention;

Fig. 2 is a partially sectioned end view taken on the line II-II in Fig. 1;

Fig. 3 is a detail side view of a principal portion of a second embodiment of the invention; and

Fig. 4 is a partially sectioned end view taken on the line IV-IV in Fig. 3.

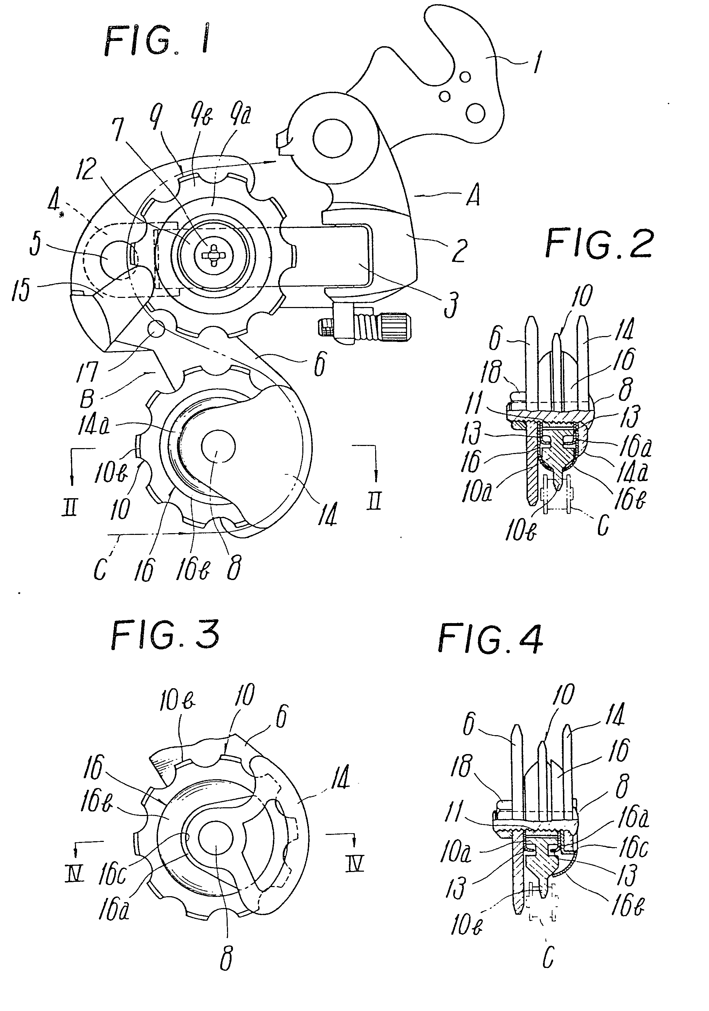

Fig. 1 shows a rear derailleur of the parallelogram or pantograph linkage type and comprises; a bracket member 1 secured in use to the fork end of a back fork of a cycle (not shown); a main body A comprising a base member 2 connected to the bracket member 1, and a movable member 4 connected to the base member 2 via two parallel links 3; and a chain shift means B comprising a pulley plate 6 pivotally mounted on the movable member 4 via a pivot shaft 5, and a guide pulley 9 and a tension pulley 10 which are supported rotatably on the pulley plate 6 via respective pulley shafts 7,8. The chain shift means B is biased in one direction of rotation with respect to the derailleur body A by means of a chain tension spring (not shown) supported on the pivot shaft 5, the tension spring serving to tension a drive chain C carried by the tension pulley 10.

Each of the pulleys 9,10 comprises a main body 9a,10a approximately equal in thickness to the drive chain C, and teeth 9b and 10b of reduced thickness thereon. As shown in Fig. 2, the pulley wheel bodies 9a,10a are provided with central apertures in which fit collars 11 which collars are screw-threadedly engaged with pulley shafts 7 and 8, so that the pulleys 9 and 10 are rotatable about said collars 11. The bodies 9a,10a of the pulleys 9,10 are also provided with dust caps 12,13 disposed on either side and extending around the collars 11 and adjacent portions of the pulley bodies 9a,10a.

The derailleur body A is mounted, in use, on the fork end (not shown) via the bracket member 1, axially outwardly of a multi-stage sprocket assembly (not shown) at the rear hub (not shown) of the cycle. The chain shift means B carries the chain C via the guide pulley 9 and the tension pulley 10, and is movable by the movable member 4 axially inwardly of the rear wheel against the force of a return spring (not shown) under the influence of a control wire (not shown), and axially outwardly of the rear wheel by the action of the return spring, for switching of the drive chain C to any desired sprocket of the multi-stage sprocket assembly. The above type of derailleur construction is well-known and is provided in known manner with first and second guard plate means 14,15 adjacent the guide and tension pulleys 9,10, respectively, for preventing escape of the drive chain C therefrom. In accordance with the present invention there is provided a pulley cap 16 between the tension pulley 10 and the first guard plate means 14 adjacent thereto.

The first guard plate means 14 covers a rear side portion of the tension pulley 10, with respect to the forward direction of movement of the cycle, the pulley teeth 10b at said rear side portion being in mesh with the drive chain C in use of the derailleur. The front edge 14a of the first guard plate means 14 with respect to the forward direction of cycle movement is positioned radially inwardly from the pulley teeth 10b at a front side portion of the tension pulley 10 and close to the centre thereof. As shown in Fig. 2, the first guard plate means 14 is mounted on the pulley shaft 8 parallel to and at a constant spacing from the pulley plate 6.

The second guard plate means 15 covers a front side portion of guide pulley 9, with respect to the forward direction of movement of the cycle, the pulley teeth 9b at said front side portion meshing with the drive chain C in use of the derailleur. The second guard plate means 15 may be formed integrally with the pulley plate 6 or may, as shown in Fig. 1, be pivotally connected to the pulley plate 6 via a pin 17 so as to be fixed in position for guarding the guide pulley 9. Alternatively, the first and second guide plate means 14 and 15 may be formed integrally with each other and secured to the pulley plate 6 through the respective pulley shafts 7,8.

The pulley cap 16, as shown in Fig. 2, is formed separately from the dust cap 13 covering the radially inner portion of the tension pulley 10 adjacent the collar 11, and is generally made from a synthetic resin or polymer material. Preferably the pulley cap 16 is made in the form of a resiliently deformable dish- or bell-shape.

In more detail, the pulley cap 16 is generally bell-shaped with a flat central portion 16a having a bore therethrough, through which bore the pulley shaft 8 extends and extending radially outwardly, with respect to the tension pulley 10, beyond the front edge of the first guide plate means 14 with an outer skirt portion 16b turned into the side of the tension pulley 10 at an outer peripheral portion thereof close to but spaced from the pulley teeth 10b.

The cap 16 together with the first guard plate means 14 are secured to the pulley plate 6, the flat central portion 16a being threaded onto the pulley shaft 8 and a nut retaining nut 18 tightened, on the threaded pulley shaft 8 to firmly clamp the pulley cap 16 together with the dust cap 13 against the collar 11.

As may be seen in Fig. 2, pulley caps 16 and dust caps 13 are in fact provided on both axial sides of the tension pulley 10 of the first embodiment. If desired though the cap 16 on the side between the tension pulley 10 and the pulley plate 6 may be only vestigial or even dispensed with entirely.

Preferably the first guard plate means 14 and pulley cap 16 are formed and arranged to have their adjoining outer surfaces generally contiguous, i.e. so as to form a generally continuous surface tending to prevent interference between the spokes of the rear wheel and the front edge of the first guard plate means 14, the spokes being guided smoothly from the outer surface of the cap 16 over the outer surface of the first guard plate means 14.

For this reason, the first guard plate means 14 is, as shown in Fig. 2, desirably provided at its front edge with a convex guide face 14a which is part-circular in cross-section and approximately contiguous with the convex skirt portion 16b of the bell-shaped cap 16. Alternatively, the cap 16 could, as shown in Fig. 4, have an axially outwardly extending stepped portion 16c extending across the front edge surface of the first guard plate means 14, so that the axially outward (and radially inward) part of the convex skirt portion 16b is approximately level with or extends axially outwardly beyond the axially outer surface of the first guard plate means 14.

The above described rear derailleur of the invention ensures that when the drive chain C is switched to a desired sprocket, it is guided axially of the sprocket by the guide and tension pulleys 9,10 and prevented from escaping therefrom by the pulley plate 6 and guard plates 14,15.

When the pulley plate 6 carrying the guide and tension pulleys 9,10 is moved axially inwardly of the rear wheel for switching the drive chain C to the lowest speed sprocket in such a manner that the chain C is in fact unintentionally shifted too far; a shift-adjusting device is set so that the lowest speed sprocket engagement derailleur portion is displaced beyond the lowest sprocket towards the rear wheel spokes; or the fork end of the cycle frame is deformed axially inwardly of the rear wheel as the result of an accident or due to the cycle falling over, although the tension pulley 10 inevitably comes into the path of the rotating spokes, the spokes tend to be displaced axially inwardly of the rear wheel as they pass over the convex skirt portion 16b and then the, more or less contiguous therewith, axially outer, guide face 14a of the guard plate 14. As a result the possibility of the spokes (not shown) being caught between the tension pulley 10 and the guard plate 14 and thereby damaging the spokes, guard plate, and/or derailleur body, or locking the rear wheel thereby resulting in falling over of the cycle are substantially avoided.

Various other modifications may also be made to the above embodiments without departing from the scope of the present invention. Thus for example the pulley cap 16 may be formed integrally with the dust cap 13 or formed so as to itself function as a dust cap.

Also, the outermost end of the skirt portion 16b of the pulley cap 16 need not actually contact the side of the tension pulley provided it is positioned close to the side of the tension pulley 10 axially inwardly of the outer surface of the drive chain C.

## CLAIMS

1.  A rear derailleur for a cycle for use in switching a drive chain (C) between the sprockets of a multi-stage sprocket assembly provided at a rear wheel of the cycle, said derailleur comprising a main derailleur body (A) provided with a base member (2) and a movable member (4) connected thereto so as to be movable axially of said sprockets and relative to said base member (2); and a chain shift means (B) provided with a pulley plate (6) pivotally mounted on said movable member (4), a guide pulley (9) and tension pulley (10) rotatably mounted on said pulley plate (6) and first and second guard plate means (14,15) formed and arranged on the opposite side of said guide and tension pulleys (9,10) respectively, from said pulley plate (6) for preventing lateral disengagement of the drive chain (C), in use of the derailleur, from said guide and tension pulleys (9,10), said first guard plate means (14) being formed and arranged with its front edge (14a) with respect to the forward direction of movement of the cycle, disposed radially inwardly of the outer periphery of the tension pulley (10) and in proximity to the centre of the latter, characterized in that a pulley cap (16) is provided between said tension pulley (10) and said first guard plate means (14), said pulley cap (16) having a central portion (16a) and a radially outer portion (16b) extending into contact with or close proximity to the side of the tension pulley (10) for preventing entry of a spoke therebetween, in use of the derailleur, said radially outer portion (16b) extending radially outwardly of said front edge (14a) of said first guard plate means (14) whereby entry of a spoke between the tension pulley (10) and first guard plate means (14) is prevented.

2.  A rear derailleur according to Claim 1, wherein said pulley cap (16) is secured to said pulley plate (6) together with said first guard plate means (14).

3. A rear derailleur according to Claim 1 or Claim 2 wherein said first guard plate has means (14) at its front side, with respect to the forward direction of movement of the cycle in use of the derailleur, a guide face (14a) substantially contiguous with the outer surface (16b) of said pulley cap (16).

4. A rear derailleur according to Claim 1 or Claim 2 wherein the front edge, with respect to the forward direction of movement of the cycle in use of the derailleur, of said first guard plate means (14) is shielded by said pulley cap (16), the axially outer surface of said cap (16) being approximately axially level with or extending axially outwardly beyond the axially outer surface of said first guard plate means (14).

5. A rear derailleur according to any one of Claims 1 to 4 wherein said pulley cap (16) is dish- or bell-shaped and made from a synthetic polymeric material, so as to be resiliently deformable.

6. A rear derailleur according to Claim 4 wherein the pulley cap (16) has a radially outer skirt portion (16b) in contact with the side of the tension pulley (10).

7. A rear derailleur according to any one of Claims 1 to 5 wherein the radially outer portion (16b) of the pulley cap is spaced from the side of the tension pulley by a distance less than the diameter of a spoke of the rear wheel of the cycle.

FIG. 1

FIG. 2

FIG. 3

FIG. 4

0036299

1/1